# EUROPÄISCHE PATENTANMELDUNG

(11) **EP 2 305 382 A1**
(43) Veröffentlichungstag der Anmeldung: **06.04.2011**
(21) Anmeldenummer: 10180584.4
(22) Anmeldetag: 28.09.2010
(51) Int. Cl.: B01J 45/00, C02F 1/68, C08F 8/00, C08F 8/36

(54) **Verfahren zur verbesserten Entfernung von Kationen mittels Chelatharzen**

(30) Priorität: 30.09.2009 DE 102009047847
(71) Anmelder: LANXESS Deutschland GmbH, 51369 Leverkusen (DE)
(72) Erfinder: Klipper, Reinhold, 50933, Köln (DE); Neumann, Stefan, 51375, Leverkusen (DE); Stoll, Jens, 51371, Leverkusen (DE); Schelhaas, Michael, 50733, Köln (DE); Vanhoorne, Pierre, 40789, Monheim (DE)

(57) **Zusammenfassung**

Die vorliegende Erfindung betrifft ein Verfahren zur verbesserten Entfernung von Kationen, bevorzugt Erdalkalimetallen, insbesondere Kalzium und Barium, aus wässrigen Lösungen mit Chelatharzen mit Essigsäure - und / oder Iminodiessigsäuregruppen mit hoher dynamischer Aufnahmekapazität für Kationen bei niedrigem Restgehalt der Kationen und hoher Regenerationseffizienz, die Chelataustauscher selber sowie deren Verwendungen.

## Beschreibung

Die vorliegende Erfindung betrifft ein Verfahren zur verbesserten Entfernung von Kationen, bevorzugt Erdalkalimetallen, insbesondere Kalzium und Barium, aus wässrigen Lösungen mit Chelatharzen mit Essigsäure - und / oder Iminodiessigsäuregruppen mit hoher dynamischer Aufnahmekapazität für Kationen bei niedrigem Restgehalt der Kationen und hoher Regenerationseffizienz, die Chelataustauscher selber sowie deren Verwendungen.

Die erfindungsgemäßen Chelataustauscher zeigen eine hohe dynamische Aufnahmekapazität für Kationen, bevorzugt für zweiwertige Kationen, insbesondere für Barium, aus wässrigen Alkalimetallsalzlösungen wobei die Chelatharze einen hohen Funktionalitätsnutzungsgrad der funktionellen Gruppen und eine hohe Regenerationseffizienz bei gleichzeitig hoher Perlstabilität zeigen.

Im Rahmen der vorliegenden Erfindung steht der Ausdruck Chelatharz auch für Chelationenaustauscher oder Chelataustauscher oder Ionenaustauscher mit chelatisierenden, funktionellen Gruppen. Zur Klarstellung sei angemerkt, dass vom Rahmen der Erfindung alle nachstehend aufgeführten, allgemeinen oder in Vorzugsbereichen genannten Definitionen und Parameter in beliebigen Kombinationen umfasst sind.

Natronlauge und Chlorgas sind bedeutende und in großen Mengen produzierte Grundchemikalien. Die modernen Verfahren zur Produktion von Natronlauge und Chlor basieren auf der Elektrolyse wässriger Natriumchloridlösungen nach dem Membranverfahren. Der Elektrolysevorgang , der mit einem hohen Energieverbrauch verbunden ist, läuft an den Membranen ab. Diese Membranen sind etwa 0,1 mm dünne, chlorbeständige Kationenaustauschermembranen, welche aus Polytetrafluorethen (PTFE/Teflon) mit negativ geladenen SO₃-Resten besteht (Nafion). Die bei der Elektrolyse entstehenden Anionen wie OH⁻ oder Cl⁻ können sie nicht passieren, wohingegen die positiv geladenen Na⁺-Ionen durch diese Membranen hindurch gelangen. Aufgrund der Undurchlässigkeit für Cl⁻-Ionen entsteht eine kaum durch Natriumchlorid verunreinigte 35 %ige Natronlauge.

Die negativ geladenen SO₃ Gruppen der Membranen können insbesondere zweiwertige Kationen wie Kalzium, Magnesium, Strontium, Barium und andere aufnehmen. Es kommt zu Ausfällungen auf den Membranen, die in der Folge dann verstopfen. Dadurch nimmt die Leistungsfähigkeit der Membranen ab. Die Ausbeute der Umsetzung von Natriumchlorid zu Chlor und Natronlauge nimmt ab, sinkende Stromdichten und steigende Zellspannungen sind die Folge und damit ein höherer spezifischer Energieverbrauch. Gleichzeitig nimmt ebenfalls die Einsatzdauer der Membranen - bis sie ersetzt werden müssen - ab.

Es ist also zwingend notwendig für den Elektrolysevorgang an den Membranen eine Natriumchloridsole bereit zu stellen, die weitestgehend frei von anderen Kationen außer Natrium ist.

Produzenten von Membranen geben für gereinigte Natriumchloridsolen folgende Empfehlungen für die Restkonzentrationen an Kationen an, die maximal in der Sole nach der Vorfällung sowie der Feinreinigung mit Chelatharzen vorliegen soll ( Bayer SP IOW 4006e, 2001 - 01 )
Kalzium 2+ ; Magnesium 2+ : < 20 ppb
Strontium 2+ : < 100 ppb
Barium 2+ : < 500 ppb

Das von den Herstellern angelieferte Natriumchlorid, in Wasser zu einer Natriumchloridsole gelöst, erfüllt diese hohen Reinheitsanforderungen nicht.

Das als Ausgangsstoff eingesetzte Natriumchlorid ist ein Naturprodukt, das neben Natriumchlorid weitere bis zu 85 chemische Elemente enthalten kann. Zudem schwankt der Gehalt an Natriumchlorid in dem Naturprodukt Natriumchlorid beträchtlich.

Das angelieferte Natriumchlorid, das zur Gewinnung von Chlor und Natronlauge bei Elektrolyseverfahren eingesetzt wird, soll einen Gehalt von mindestens ca. 97 Gew. % NaCl besitzen.

Je nach Herkunft enthält es zusätzlich unterschiedliche Mengen an zwei - und mehr- wertigen Kationen wie die oben genannten Kationen sowie in Spuren, Zink, Cobalt, Eisen, Nickel, Chrom, Kupfer, Kalium u.a. sowie verschiedene Anionen.

Zum Beispiel liefert eine Analyse der wichtigsten Mineralien des natürlichen Steinsalzes Zechsteinerzeit entstanden vor ca. 280 Mill. Jahren durch Austrocknung der Meere, durchgeführt von Geo-Anal-Speck in Krakau in 1991 mit der Sektrophotometricmethode (ASS) einen Gehalt an 0,271 ppm Ca, 0,03 ppm Mg, 4,1 ppm Zn, 142 ppm Fe, 2,7 ppm Co, 432 ppm Ni, 0,34 ppm Cu, 0,09 ppm Cr sowie 6,8 ppm Mn, bezogen auf 100 g Salz. Unabhängig von den Erdalkalimetallen können die genannten Schwermetalle während des Elektrolysevorgangs zu Schäden an den verwendeten Elektroden, bevorzugt den heute verwendeten Gasdiffusionselektroden führen.

Die Konzentration an Natriumchlorid in der wässrigen Natriumchloridlösung, die zur Elektrolyse eingesetzt wird, liegt im Bereich von 250 - 330 Gramm NaCl pro Liter Lösung.

Insbesondere die Konzentration an zweiwertigen Kationen soll aus den oben genannten Gründen vor dem Elektrolysevorgang möglichst quantitativ entfernt werden, da sie den Elektrolysevorgang ungünstig beeinflussen.

Daher wird bereits heute eine in der Alkalichloridelektrolyse zu verwendende wässrige Natriumchloridlösung vor der Elektrolyse in zwei Schritten gereinigt; in einem ersten Schritt wird durch Ausfällung eine größere Menge der zweiwertigen Kationen entfernt. Ihre Konzentration in den wässrigen Solen nach der Ausfällung liegt dann im Bereich von ca. 0,1 bis ca. 20 ppm. In einem zweiten Schritt wird die Konzentration insbesondere der zweiwertigen Kationen Kalzium, Magnesium, Strontium, Barium in der Sole durch Überfiltration über Chelationenaustauscher auf Restwerte im Ablauf der Säule je nach Kationenart kleiner ca. 500 ppb bis ca. 20 ppb reduziert.

Überschreitet die Konzentration an zweiwertigen Kationen einzeln oder in Summe die genannten Werte im Säuleneluat, so wird die Säule regeneriert.

Die Selektivität von Chelationenaustauschern für die Entfernung der zweiwertigen Kationen Kalzium, Magnesium, Strontium, Barium aus Natriumchloridsolen ist unterschiedlich. Es ergibt sich folgende Reihenfolge in abnehmender Selektivität: Magnesium > Kalzium> > Strontium > Barium > Alkalien( Na). Bariumionen werden daher deutlich schlechter aufgenommen als Magnesiumionen und Kalziumionen.

Dies berücksichtigen die Produzenten der Membranen in der Weise, dass sie für die zweiwertigen Kationen Kalzium, Magnesium, Strontium, Barium die oben genannten unterschiedlichen Restwerte in der gereinigten Sole empfehlen.

Es muss daher das Ziel sein ein Chelatharz mit verbesserter Selektivität zu entwickeln, das neben einer allgemein hohen Aufnahmefähigkeit für zweiwertige Kationen insbesondere eine hohe Aufnahmefähigkeit für Kationen wie Barium zeigen.

Die Menge an zweiwertigen Kationen, die das Chelatharz bis zum Überschreiten der Konzentration größer dem Grenzwert, der für Kalzium und Magnesium bei 20 ppb an Kationen im wässrigen Ablauf des Chelatharzes liegt, aufgenommen hat, wird hierbei als dynamische Aufnahmekapazität des Chelatharzes bezeichnet.

Die so gereinigte Sole wird elektrolytisch zu Natronlauge und Chlor umgesetzt - siehe R.M. Klipper, H. Hoffmann, T. Augustin, Ion Exchange Advances, Proceedings of IEX 92, Seite 414 ff.; Elsevier Applied Science, London, 1992.

Ist der Chelationenaustauscher mit den oben genannten Kationen wie Kalzium, Magnesium, Strontium, Barium soweit beladen, dass er nicht mehr ausreichend die Kationen entfernen kann, und im Eluat Werte an Kalzium und Magnesium > 20 ppb gemessen werden, so muss er mit Säuren, bevorzugt Salzsäure, regeneriert werden. Die chelatisierenden Gruppen werden in die Wasserstoffform überführt. Anschließend wird das Chelatharz mit Natronlauge in die Natriumform der chelatisiernden Gruppen überführt und kann dann von Neuem zweiwertige Kationen aus der Sole entfernen.

Gefragt sind Chelationenaustauscher mit einer hohen dynamischen Aufnahmekapazität für zweiwertige Kationen wie Kalzium, Magnesium, Strontium, Barium aus wässrigen Salzsolen, insbesondere Natriumchloridsolen bei niedrigen Restwerten an Kationen in der gereinigten Lösung, einem hohen Ausnutzungsgrad der funktionellen Gruppen bei der Beladung, sowie einer hohen Regenerationseffizienz bei gleichzeitig hoher Perlstabilität der Chelatharze.

In der US-A 4818773 werden Chelatharze mit Iminodiessigsäuregruppen beschrieben und ihre Aufnahmekapazität für Kationen wie Kalzium und Magnesium aus Natriumchloridsolen im Soletest geprüft.

Ihre dynamische Aufnahmekapazität für Kalziumionen wurde bestimmt. Sie liegt bei Amberlite^{®} XE 318, einem Chelatharz mit Iminodiessigsäuregruppen, bei 7,1 Gramm Kalzium pro Liter Harz. Es wurden 520 Bettvolumen Sole in 26 Stunden über das Chelatharz filtriert - bei einer Geschwindigkeit von 20 Bettvolumen ( BV ) pro Stunde.

Die Konzentration an Kalzium in der gereinigten Sole liegt bei 20 ppb, die Beladung der Chelatharze mit Natriumchloridsole wurde dann beendet, wenn die Kalziumkonzentration > 500 ppb im Ablauf der Chelatharze ist.

In der DE 3 704 307 A1 werden Chelatharze mit Iminodiessigsäuregruppen beschrieben und ihre dynamische Aufnahmekapazität für Kationen wie Kalzium und Magnesium aus Natriumchloridsolen im Soletest geprüft.

Ihre dynamische Aufnahmekapazität für Kalziumionen wurde bestimmt. Sie liegt für Lewatit^{®} OC 1048 der Bayer AG, einem makroporösen Chelatharz mit Iminodiessigsäuregruppen, bei 4,2 Gramm Kalzium pro Liter Harz, Beispiel 2.

Die Konzentration an Kalzium in der gereinigten Sole liegt für den größten Teil des Beladungszyklus bei < 20 ppb, die Beladung des Chelatharzes mit Natriumchloridsole wird dann beendet, wenn die Kalziumkonzentration > 50 ppb im Ablauf der Chelatharze ist.

Aus EP 1 078 690 A2 ist ein Verfahren zur Herstellung von monodispersen Ionenaustauschern mit chelatisierenden Gruppen bekannt, wobei als chelatisierende Gruppen (CH₂)ₙ-NR₁R₂ im Ionenaustauscher vorliegen und R₁ unter anderem für H, CH₂-COOH steht und R₂ unter anderem für CH₂-COOH steht und n für eine ganze Zahl zwischen 1 und 4 steht.

Die im Stand der Technik beschriebenen Chelatharze erfüllen die Anforderungen zur Feinreinigung von Salzsolen bei den heute angewandten Membran Elektrolyseverfahren nicht. Die Restmenge an Kalzium in der gereinigten Sole bei US-A 4818773 liegt bei 20 ppb. Die Restmenge an Kalzium in der gereinigten Sole bei DE 3 704 307 A1 liegt nur teilweise < 20 ppb. Zudem ist die Menge an aufgenommenem Kalzium nicht ausreichend hoch, so dass in der US-A 4818773 die Beladung bereits nach 26 Stunden beendet ist und dann eine Regeneration erfolgen muss. Im Dauerbetrieb muss das Chelatharz also mehrere hundert mal pro Jahr regeneriert werden. Die Chelatharze der EP 1 078 690 A2 zeigen insbesondere bei gleichzeitiger Anwesenheit von Calcium und Barium nicht die für heutige Membranprozesse erforderliche Bariumselektivität.

Die Aufgabe der vorliegenden Erfindung ist deshalb die Bereitstellung neuer Chelataustauscher zur deutlich besseren Entfernung
- von Erdalkalimetallen wie Magnesium, Calcium, Strontium und insbesondere Barium bei gleichzeitiger Anwesenheit von Kalzium aus wässrigen Solen, wie sie in der Chloralkalielektrolyse üblicherweise anfallen,
- von Schwermetallen und Edelmetallen aus wässrigen Lösungen oder organischen Flüssigkeiten oder deren Dämpfen, besonders von Quecksilber aus wässrigen Lösungen von Erdalkalimetallen und Alkalimetallen, insbesondere eine Entfernung von Quecksilber aus Solen der Alkalichloridelektrolyse.

Gegenstand der vorliegenden Erfindung ist ein Verfahren zur Herstellung monodisperser Ionenaustauscher mit chelatisierenden, funktionellen Gruppen, dargestellt durch das Strukturelement (I) 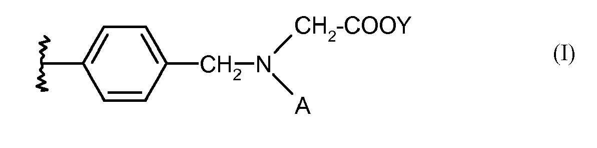 worin 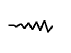 für das Polymergerüst steht und Y für Wasserstoff, Natrium oder Kalium steht und A für Wasserstoff, CH₂COONa, CH₂COOH oder CH₂COOK steht,
**dadurch gekennzeichnet, dass** man
a) Monomertröpfchen aus wenigstens einer monovinylaromatischen Verbindung und wenigstens einer polyvinylaromatischen Verbindung sowie wenigstens einem Porogen und wenigstens einem Initiator oder einer Initiatorkombination nach dem Jetting Prinzip oder dem Seed-Feed Prinzip zu einem monodispersen, vernetzten Perlpolymerisat umsetzt,
b) das monodisperse, vernetzte Perlpolymerisat mit Phthalimidderivaten phthalimidomethyliert, indem man eine Teilmenge von 1 bis 15 Gew.-% des Perlpolymerisats in das SO₃-Addukt des in inertem Lösungsmittel vorliegenden Phthalimidderivats einträgt und bei einer Temperatur von ≤ 35°C für 1 bis 15 Stunden rührt, wobei die Menge an freiem SO₃ 0,28 bis 0,5 mol bezogen auf 1 mol Phthalimid beträgt, und danach die restliche Menge des Perlpolymerisats in das SO₃-Addukt des in inertem Lösungsmittel vorliegenden Phthalimidderivats bei einer Temperatur von 30-75°C einträgt,
c) das phthalimidomethylierte Perlpolymerisat zu aminomethyliertem Perlpolymerisat umsetzt und
d) das aminomethylierte Perlpolymerisat zu Ionenaustauschern mit chelatisierenden, funktionellen Gruppen reagieren lässt.

Überraschenderweise lassen sich durch das erfindungsgemäße Verfahren Chelatharze mit Essigsäure- und/oder Iminodiessigsäuregruppen erzeugen, die den Stand der Technik durch eine außerordentlich hohe Totalkapazität übertreffen.

Gegenstand der vorliegenden Erfindung sind deshalb auch monodisperse Ionenaustauscher mit chelatisierenden, funktionellen Gruppen des Strukturelements (I) 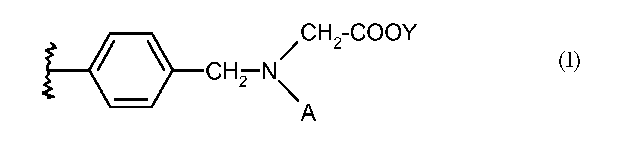 worin 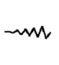 für das Polymergerüst steht und Y für Wasserstoff, Natrium oder Kalium steht und A für Wasserstoff, CH₂COONa, CH₂COOK oder CH₂COOH steht, mit einer Totalkapazität TK von 2,7 bis 3,2 mol/l und einem mittleren Porendurchmesser von 75 bis 90 nm, bevorzugt erhältlich durch
a) Umsetzen von Monomertröpfchen aus wenigstens einer monovinylaromatischen Verbindung und wenigstens einer polyvinylaromatischen Verbindung sowie wenigstens einem Porogen und wenigstens einem Initiator oder einer Initiatorkombination nach dem Jetting Prinzip oder dem Seed-Feed-Prinzip zu einem monodispersen, vernetzten Perlpolymerisat,
b) Phthalimidomethylieren des monodispersen, vernetzten Perlpolymerisats mit Phthalimidderivaten, indem man eine Teilmenge von 1 bis 15 Gew.-% des Perlpolymerisats in das SO₃-Addukt des in inertem Lösungsmittel vorliegenden Phthalimidderivats einträgt und bei einer Temperatur von ≤ 35°C für 1 bis 15 Stunden rührt, wobei die Menge an freiem SO₃ 0,28 bis 0,5 mol bezogen auf 1 mol Phthalimid beträgt und danach die restliche Menge des Perlpolymerisats in das SO₃-Addukt des in inertem Lösungsmittel vorliegenden Phthalimidderivats bei einer Temperatur von 30-75°C einträgt,
c) Umsetzen des phthalimidomethylierte Perlpolymerisats zu aminomethyliertem Perlpolymerisat und
d) Reagieren des aminomethylierten Perlpolymerisats zu Ionenaustauschern mit chelatisierenden, funktionellen Gruppen.

In einer bevorzugten Ausführungsform steht im Strukturelement (I) Y für Wasserstoff oder Natrium und A für Wasserstoff, CH₂COOH oder CH₂COONa.

In einer bevorzugten Ausführungsform weisen die erfindungsgemäßen Chelataustauscher eine Porosität von 52 bis 65 % auf. In einer weiteren bevorzugten Ausführungsform weisen die erfindungsgemäßen Chelataustauscher einen mittleren Perldurchmesser von 240 bis 480 µ auf. In einer weiteren bevorzugten Ausführungsform weisen die erfindungsgemäßen Chelataustauscher ein Porenvolumen von 700 bis 950 mm³/g auf. In einer weiteren bevorzugten Ausführungsform weisen die erfindungsgemäßen Chelataustauscher einen mittleren Porendurchmesser von 75 bis 90 mm auf.

Ferner weisen sie eine herstellungsbedingte monodisperse Teilchengrößenverteilung auf.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von ± 10 % des häufigsten Durchmesser um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Erfindungsgemäß mittlere Perldurchmesser liegen im Bereich von 240 bis 480 µ, bevorzugt von 250 bis 450 µ. Die Monodispersität der erfindungsgemäßen Chelataustauscher ist verfahrensbedingt, als dass die Perlpolymerisat-Vorstufe, also das monodisperse, vernetzte, vinylaromatische Grundpolymerisat, nach dem Jetting Prinzip oder dem Seed-Feed-Prinzip (Saatzulaufverfahren) hergestellt wird. Diesbezüglich sei auf den Stand der Technik in US-A 4 444 961, EP-A 0 046 535, US 4419245 oder WO 93/12167 verwiesen, deren Inhalte von der vorliegenden Anmeldung hinsichtlich des Verfahrensschrittes a) von der vorliegenden Anmeldung mit umfasst werden.

Die erfindungsgemäßen Chelatharze mit Essigsäure- und/oder Iminodiessigsäuregruppen mit den oben beschriebenen Eigenschaften erhält man dabei, ohne dass eine Nachvernetzung stattfindet. Sie zeigen eine gegenüber dem Stand der Technik deutlich bessere Entfernung von Erdalkalien wie Magnesium, Calcium, Barium oder Strontium aus wässrigen Solen, wie sie in der Chloralkalielektrolyse üblicherweise anfallen und darüber hinaus eine gegenüber Barium deutlich verbesserte Selektivität bei gleichzeitig deutlich verbesserter Calciumaufnahme sowie eine verbesserte Adsorptionsfähigkeit gegenüber der oben genannten Schwermetallen wie sie in Spuren in Steinsalzsolen vorkommen.

Die erfindungsgemäßen Chelatharze mit Essigsäure- und/oder Iminodiessigsäuregruppen eignen sich deshalb hervorragend für die verschiedensten Einsatzgebiete in der chemischen Industrie, der Elektronik-Industrie, der Abfall-Entsorgungs/Verwertungs-Industrie oder der Galvano- oder Oberflächentechnik, insbesondere aber zur Reinigung von Solen für die Alkalielektrolyse.

Darüber hinaus dienen sie zum Schutz der heutzutage in der Chloralkalielektrolyse eingesetzten Gasdiffusionselektroden, insbesondere von Sauerstoff-Verzehrelektroden, indem sie die Solen von Schwermetallen weitestgehend befreien.

In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt monoethylenisch ungesättigte Verbindungen, besonders bevorzugt Styrol, Vinyltoluol, Ethylstyrol, α-Methylstyrol, Chlorstyrol, Chlormethylstyrol, Acrylsäurealkylester oder Methacrylsäurealkylester, eingesetzt.

Insbesondere bevorzugt wird Styrol oder Mischungen aus Styrol mit den vorgenannten Monomeren eingesetzt.

Bevorzugte polyvinylaromatische Verbindungen im Sinne der vorliegenden Erfindung sind für Verfahrensschritt a) multifunktionelle ethylenisch ungesättigte Verbindungen, besonders bevorzugt Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des kugelförmigen Polymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

In einer bevorzugten Ausführungsform der vorliegenden Erfindung kommen in Verfahrensschritt a) mikroverkapselte Monomertröpfchen zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die gegebenenfalls mikroverkapselten Monomertröpfchen enthalten wenigstens einen Initiator oder Mischungen von Initiatoren zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Die Begriffe mikroporös oder gelförmig bzw. makroporös sind in der Fachliteratur bereits eingehend beschrieben worden.

Die Ausbildung monodisperser, makroporöser Perlpolymerisate erfolgt durch Zusatz von Inertmaterialien, bevorzugt wenigstens einem Porogens, zu der Monomermischung bei der Polymerisation, um im kugelförmigen Polymerisat eine makroporöse Struktur zu erzeugen. Hierfür sind organische Lösungsmittel geeignet, die das entstandene Polymerisat schlecht lösen bzw. quellen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Polymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4 382 124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Zu verwendende Perlpolymerisate im Sinne der vorliegenden Erfindung, hergestellt durch Verfahrensschritt a), weisen also aufgrund der Verwendung von Porogen eine makroporöse Struktur auf.

Das gegebenenfalls mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teichengröße der gegebenenfalls verkapselten Monomertröpfchen im Schritt a) beträgt 10 - 380 µm, vorzugsweise 100 - 330 µm. Die mittlere Teilchengröße der aus den verkapselten Monomertröpfchen im Verfahrensschritt a) erhaltenen monodispersen Perlpolymerisate beträgt 10-350 µm, vorzugsweise 100 - 300 µm.

Bei der Herstellung der monodispersen Perlpolymerisate gemäß Verfahrensschritt a) kann die wässrige Phase in einer weiteren bevorzugten Ausführungsform einen gelösten Polymerisationsinhibitor enthalten. Als Inhibitoren im Sinne der vorliegenden Erfindung kommen sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls Mikroverkapselten Monomertröpfchen zum kugelförmigen, monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum kugelförmigen, monodispersen, makroporösen Perlpolymerisat in Verfahrensschritt a) kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5 - 500 mmol/l, vorzugsweise 2,5 - 100 mmol/l.

Die Rührgeschwindigkeit bei der Polymerisation ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Im Verfahrensschritt b) wird zunächst das Amidomethylierungsreagens hergestellt. Dazu wird ein Phthalimidderivat in einem Lösungsmittel gelöst und mit Formalin versetzt. Anschließend wird unter Wasserabspaltung hieraus ein Bis-(Phthalimido)ether gebildet. Der Bis-(Phthalimido)ether kann gegebenenfalls zum Phthalimidoester umgesetzt werden. Bevorzugte Phthalimidderivate im Sinne der vorliegenden Erfindung sind Phthalimid selber oder substituierte Phthalimide, bevorzugt Methylphthalimid.

Als Lösungsmittel kommen im Verfahrensschritt b) inerte Lösungsmittel zum Einsatz, die geeignet sind, das Polymer zu quellen, bevorzugt chlorierte Kohlenwasserstoffe, besonders bevorzugt Dichlorethan oder Methylenchlorid.

Im Verfahrensschritt b) wird das Perlpolymerisat mit Phthalimidderivaten kondensiert. Als Katalysator wird hierbei Oleum, Schwefelsäure oder Schwefeltrioxid eingesetzt um daraus ein SO₃-Addukt des Phthalimidderivats im inerten Lösungsmittel herzustellen.

Erfindungsgemäß geht man dabei so vor, dass man bei Temperaturen von ≤ 35°C, bevorzugt von 5 bis 30°C, zunächst eine Teilmenge des Perlpolymerisats aus Verfahrensschritt a) in das SO₃-Addukt des im inerten Lösungsmittel, bevorzugt 1,2-Dichlorethan, vorliegenden Phthalimidderivats einträgt. Bevorzugt ist die Teilmenge 1 bis 15 Gew.-% der Gesamtenge an zu verarbeitendem Perlpolymerisat. Die Menge an freiem SO₃ beträgt dabei 0,28 bis 0,65 mol, bezogen auf 1 mol Phthalimid das zur Bildung des Phthalimidderivats eingesetzt wurde.

Diese Teilmenge wird dann bei den oben genannten Temperaturen phthalimidomethyliert, indem der Ansatz über einen Zeitraum von 1 bis 15 Stunden gerührt wird.

Danach erfolgt der Eintrag der Restmenge an zu verarbeitendem Perlpolymerisat bei Temperaturen von 30 bis 75°C, bevorzugt von 35 bis 65°C.

Die Ergebnisse der vorliegenden Untersuchungen zeigen, dass die stufenweise Zugabe des Perlpolymerisats im Verfahrensschritt b) überraschenderweise zu einer höheren Ausbeute an Chelataustauscher führt und gleichzeitig diese eine höhere Totalkapazität als der Stand der Technik aufweisen.

Das äußert sich durch einen höheren Phthalimidomethylierungsgrad des Perlpolymerisats (Erstsubstitution), einer höheren Ausbeute des Endprodukts in ml pro Gramm eingesetztem Perlpolymerisat sowie einem gegenüber dem Stand der Technik deutlich erhöhten Funktionalisierungsgrad des Chelataustauschers (Zweitsubstitution).

Unter einem erhöhten Funktionalisierungsgrad ist zu verstehen, dass das als Zwischenstufe entstehende aminomethylierte Perlpolymerisat aus Verfahrensschritt c) vollständiger mit Amino-/Iminoessigsäuregruppen funktionalisiert ist (erhöhte Zweitsubstitution).

Die Abspaltung des Phthalsäurerestes und damit die Freilegung der Aminomethylgruppe erfolgt im Verfahrensschritt c) durch Behandeln des phthalimidomethylierten vernetzten Perlpolymerisates mit wässrigen oder alkoholischen Lösungen eines Alkalihydroxids, wie Natriumhydroxid oder Kaliumhydroxid bei Temperaturen von 100 bis 250°C, vorzugsweise von 120 bis 190°C. Die Konzentration der Natronlauge liegt im Bereich von 10 bis 50 Gew.-%, vorzugsweise von 20 bis 40 Gew.-%. Dieses Verfahren ermöglicht die Herstellung aminoalkylgruppenhaltiger vernetzter Perlpolymerisate mit einer Substitution der aromatischen Kerne größer 1.

Das dabei entstehende aminomethylierte Perlpolymerisat wird schließlich mit vollentsalztem Wasser alkalifrei gewaschen.

Im Verfahrensschritt d) erfolgt die Herstellung der erfindungsgemäßen Chelataustauscher durch Umsetzung des Aminomethylgruppen-haltigen monodispersen, vernetzten, vinylaromatischen Grundpolymerisates in wässriger Suspension mit Chloressigsäure oder ihren Derivaten. Ein insbesondere bevorzugtes Chloressigsäurederivat ist das Natriumsalz der Chloressigsäure.

Das Natriumsalz der Chloressigsäure wird bevorzugt als wässrige Lösung eingesetzt.

Die wässrige Lösung des Natriumsalzes der Chloressigsäure wird bei der Reaktionstemperatur innerhalb von 0,5 bis 15 Stunden in die vorgelegte wässrige Suspension des Aminomethylgruppen-haltigen Grundpolymerisates dosiert.Bevorzugt erfolgt die Dosierung innerhalb von 5 bis 11 Stunden.

Die bei der Umsetzung der aminomethylgruppen haltigen Perlpolymerisate mit Chloressigsäure freiwerdende Salzsäure wird durch Zugabe von Natronlauge teilweise oder ganz neutralisiert, sodass der pH Wert der wässrigen Suspension bei dieser Reaktion im Bereich zwischen pH 5 bis 10,5 eingestellt wird. Bevorzugt wird die Reaktion bei pH 9 durchgeführt.

Die Reaktion wird bei Temperaturen im Bereich zwischen 50 und 100 °C durchgeführt. Bevorzugt erfolgt die Reaktion bei Temperaturen im Bereich zwischen 80 und 95 °C .

Als Suspensionsmedium wird Wasser oder wässrige Salzlösung eingesetzt. Als Salze kommen Alkalimetallsalze insbesondere NaCl und Natriumsulfat in Frage.

Die erfindungsgemäßen Ionenaustauscher mit chelatisierenden, funktionellen Gruppen eignen sich zur Adsorption von Metallen, insbesondere Schwermetallen und Edelmetallen und ihren Verbindungen aus wässrigen Lösungen und organischen Flüssigkeiten. Die erfindungsgemäßen Ionenaustauscher mit chelatisierenden, funktionellen Gruppen eignen sich besonders zur Entfernung von Schwermetallen oder Edelmetallen aus wässrigen Lösungen, insbesondere aus wässrigen Lösungen von Erdalkalimetallen oder Alkalimetallen, aus Solen für die Alkalichloridelektrolyse. Darüber hinaus eignen sich die erfindungsgemäßen Ionenaustauscher mit chelatisierenden, funktionellen Gruppen zur Entfernung von Erdalkalimetallen aus Solen, wie sie üblicherweise in der Alkalichloridelektrolyse eingesetzt werden. Die vorliegende Erfindung betrifft deshalb die Verwendung der erfindungsgemäßen Chelatharze zur Adsorption von Metallen, wobei es sich bei den Metallen um Erdalkalimetalle, Schwermetalle oder Edelmetalle handelt.

Schwermetalle und Edelmetalle im Sinne der vorliegenden Erfindung sind Quecksilber, Eisen, Kobalt, Nickel, Kupfer, Zink, Blei, Cadmium, Mangan, Uran, Vanadium, Elemente der Platingruppe sowie Gold oder Silber.

Bevorzugt betrifft die vorliegende Erfindung die Adsorption der Metalle aus wässrigen Lösungen und organischen Flüssigkeiten, wobei es sich besonders bevorzugt bei den wässrigen Lösungen um Lösungen von Erdalkalimetallen oder Alkalimetallen oder Solen für die Alkalichloridelektrolyse handelt, mittels der erfindungsgemäßen Ionenaustauscher mit chelatiserenden, funktionellen Gruppen.

In einer bevorzugten Ausführungsform betrifft die vorliegende Erfindung die Verwendung der erfindungsgemäßen Chelataustauscher zur Entfernung von Erdalkalimetallen aus Solen für die Alkalichloridelektrolyse, bevorzugt von Magnesium, Kalzium, Strontium oder Barium aus Solen für die Alkalichloridelektrolyse.

Bevorzugt betrifft die vorliegende Erfindung die selektive Entfernung von Barium aus Solen für die Alkalichloridelektrolyse bei gleichzeitig deutlich verbesserter Kalzium Adsorption mittels der erfindungsgemäßen Chelatharze.

Die vorliegende Erfindung betrifft aber auch die Verwendung der erfindungsgemäßen Chelataustauscher zum Schutz der in der Alkalichloridelektrolyse verwendeten Membranen und Elektroden, insbesondere Gasdiffusionselektroden. Dieser Schutz resultiert aus der Absorption der für die Membranen und Elektroden schädlichen Erdalkalimetalle und Schwermetalle.

Die vorliegende Erfindung betrifft ferner die Verwendung der erfindungsgemäßen Chelataustauscher zur Steigerung der Effektivität von Membranverfahren in der Alkalichloridelektrolyse. Die vorliegende Erfindung betrifft daher auch ein Verfahren zur Steigerung der Effektivität von Alkalichloridelektrolyseprozessen durch Adsorption der für den Elektrolyseprozess schädlichen Erdalkalimetalle und Schwermetalle, insbesondere Kalzium und Barium sowie Zink, Eisen, Cobalt, Nickel, Kupfer, Chrom und Mangan mittels der erfindungsgemäßen Chelataustauscher. Vollentsalztes Wasser oder VE-Wasser im Sinne der vorliegenden Erfindung ist gekennzeichnet, indem es eine Leitfähigkeit von 0,1 bis 10µS besitzt, wobei der Gehalt an löslichen Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

### Bestimmung der Menge an chelatisierenden Gruppen - Totalkapazität (TK) des Harzes

100 ml Austauscher werden in eine Filtersäule gefüllt und mit 3 gew.-%iger Salzsäure in 1,5 Stunden eluiert. Dann wird mit vollentsalztem Wasser gewaschen bis der Ablauf neutral ist.

50 ml regenerierter Ionenaustauscher werden in einer Säule mit 0,1 n Natronlauge (= 0,1 normaler Natronlauge) beaufschlagt. Den Ablauf fängt man jeweils in einem 250 ml Messkolben auf und titriert die gesamte Menge gegen Methylorange mit In Salzsäure.

Es wird solange aufgegeben, bis 250 ml Ablauf einen Verbrauch von 24,5-25 ml an In Salzsäure haben. Nach beendeter Prüfung bestimmt man das Volumen des Austauschers in der Na-Form.
Totalkapazität (TK) = (X. 25 -∑ V) · 2·10⁻² in mol/l Austauscher.
X = Zahl der Ablauffraktionen
∑ V = Gesamtverbrauch in ml an In Salzsäure bei der Titration der Abläufe.

### Bestimmung des mittleren Porendurchmessers

Die Bestimmung des mittleren Porendurchmessers und der Porengrößenverteilung erfolgt durch Hg-Porosimetrie, insbesondere nach DIN 66133.

### Bestimmung des Perldurchmessers

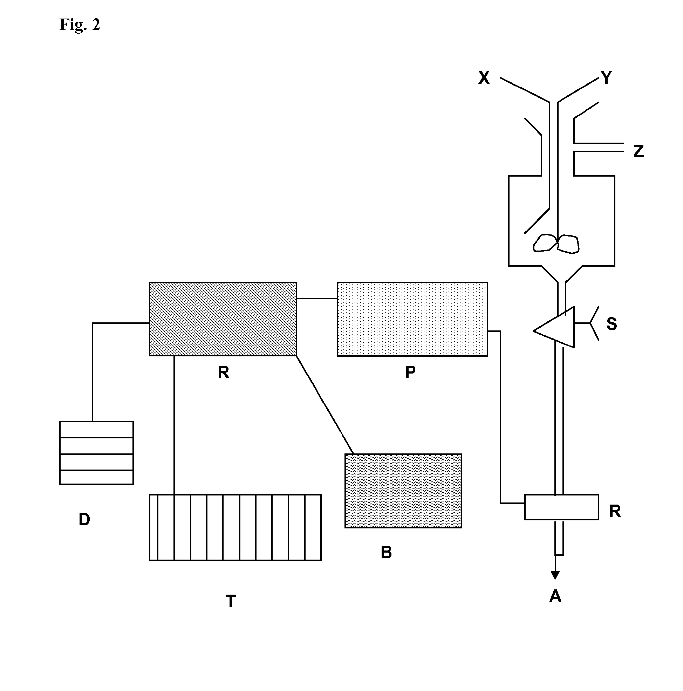

Zunächst wird das Rührgefäß mit 5 1 voll entsalztem Wasser gefüllt und der Rührer auf eine Umdrehungszahl von 100 U/min eingestellt.(siehe Fig 2) .

Anschließend ist der Haupthahn des Rührgefäßes zu öffnen und darauf zu achten, dass keine Luftblasen in den Messsensor gelangen.

Nach dem Programmstart werden insgesamt ca. 1000 Ionenaustauscherperlen in Portionen zu ca. 100 Perlen vorsichtig in das Rührgefäß gegeben.

Fig. 2 zeigt beispielhaft eine Messanordnung zur Bestimmung des mittleren Perldurchmessers.
In Fig. 2 bedeuten
X = Zulauf für voll entsalztes Wasser
Y = Rührer
Z = Überlauf
R = Messsensor, HCB 250
A = Ablauf
P = PMT 2120 Messzähler
B = Bildschirm
R = Personal Computer
D = Drucker
S = Absperrventil
T = Tastatur

### Manuelle Auswertung

Eine manuelle Darstellung der Korngrößenverteilung erfolgt durch die Auftragung der Volumenprozente der ermittelten Siebfraktionen in ein Körnungsnetz (z.B. Selecta Nr. 421 1/2 A4, Schleicher und Schüll) und Verbinden der einzelnen Auftragungspunkte zu einer Kurve.

| | |
|---|---|
| Abzisse: | Rückstandssummen auf dem einzelnen Sieb in % |
| Ordinate : | Korngröße in mm |

An die erhaltene Kurve legt man eine Gerade, die dem ursprünglichen Linienzug möglichst nahe kommt. Die Schnittpunkte dieser Geraden mit den Senkrechten für 90 und 40 % Rückstand, ergeben jeweils einen Wert in mm.

Der Wert für 90 % Rückstand ist die Effektive Korngröße.

Der aus der Grafik ermittelte Wert für 40 % Rückstand, dividiert durch die Effektive Korngröße, ergibt den Gleichheitskoeffizienten.

Zunächst wird das Rührgefäß mit 5 l VE-Wasser gefüllt und der Rührer auf eine Umdrehungszahl von 100 U/min eingestellt. Das PMT-Gerät, die EDV-Einheit und der Drucker werden dann entsprechend dem PMT-2120 Bedienungshandbuch bzw. der PAMAS-Software (Version 2.11) in Betrieb genommen.

Anschließend ist der Haupthahn des Rührgefäßes zu öffnen und darauf zu achten, dass keine Luftblasen in den Messsensor gelangen.

Nach dem Programmstart werden insgesamt ca. 1000 Ionenaustauscherperlen in Portionen zu ca. 100 Perlen vorsichtig in das Rührgefäß gegeben. Es ist darauf zu achten, dass nicht zu viele Perlen in den Detektor gelangen, da dies zu einer Ergebnisverfälschung führen würde. Weiterhin ist zu beachten, dass keine Perlenagglomerate auftreten. Eine Messung dauert in der Regel 7 bis 10 Minuten.

### Berechnungen

### a) Automatische Auswertung

Nach Programmende erfolgt eine automatische Auswertung mit Bestimmung der Korngrößenverteilung, der Effektiven Korngröße und des Gleichheitskoeffizienten

### b) Manuelle Auswertung

Eine manuelle Darstellung der Korngrößenverteilung erfolgt durch die Auftragung der Volumenprozente der ermittelten Siebfraktionen in ein Körnungsnetz (z.B. Selecta Nr. 421 1/2 A4, Schleicher und Schüll) und Verbinden der einzelnen Auftragungspunkte zu einer Kurve.

| | |
|---|---|
| Abzisse: | Rückstandssummen auf dem einzelnen Sieb in % |
| Ordinate : | Korngröße in mm |

An die erhaltene Kurve legt man eine Gerade, die dem ursprünglichen Linienzug möglichst nahe kommt. Die Schnittpunkte dieser Geraden mit den Senkrechten für 90 und 40 % Rückstand, ergeben jeweils einen Wert in mm.

Der Wert für 90 % Rückstand ist die Effektive Korngröße.

Der aus der Grafik ermittelte Wert für 40 % Rückstand, dividiert durch die Effektive Korngröße, ergibt den Gleichheitskoeffizienten.

### Bestimmung des Quecksilberporenvolumens

Die Bestimmung des Porenvolumens erfolgt durch Hg-Porosimetrie, insbesondere nach DIN 66135.

### Beispiele

### Beispiel 1

### 1a) Herstellung des monodispersen, makroporösen Perlpolymerisates auf der Basis von Styrol, Divinylbenzol und Ethylstyrol

In einem 10 l Glasreaktor wurden 3000 g vollentsalztes Wasser vorgelegt und eine Lösung aus 10 g Gelatine, 16 g di-Natriumhydrogenphosphatdodekahydrat und 0,73 g Resorcin in 320 g voll entsalztes Wasser hinzugefüllt und durchmischt. Die Mischung wurde auf 25 °C temperiert. Unter Rühren wurde anschließend eine Mischung aus 3200 g von mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 260 µm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 µm-Sieb gewaschen und anschließend im Vakuum bei 80°C getrocknet. Man erhielt 1893 g eines kugelförmigen Polymerisates mit einer mittleren Teilchengröße von 240 µm, enger Teilchengrößenverteilung und glatter Oberfläche.

Das Polymerisat war in der Aufsicht kreidig weiß und weist eine Schüttdichte von ca. 350 g/l auf.

### 1b) Herstellung des amidomethylierten Perlpolymerisates

Bei Raumtemperatur wurden 3855 g Dichlorethan, 875,4 g Phthalimid und 615,6 g 29,6 gew.-%iges Formalin vorgelegt .Der pH Wert der Suspension wurde mit Natronlauge auf 5,5 bis 6 eingestellt. Anschließend wurde das Wasser destillativ entfernt. Dann wurden 64,2 g Schwefelsäure zudosiert. Das entstehende Wasser wurde destillativ entfernt. Der Ansatz wurde abgekühlt. Bei 30°C wurden 271,2 g 65 %iges Oleum und anschließend 37,1 g monodisperses Perlpolymerisat, hergestellt nach Verfahrensschritt 1a) eindosiert. Die Suspension wurde weitere 2 Stunden bei 30°C gerührt. Dann wurden innerhalb von 30 Minuten weitere 334,3 g monodisperses Perlpolymerisat, hergestellt nach Verfahrensschritt 1a) eindosiert. Die Suspension wurde auf 70°C erhitzt und weitere 6,5 Stunden bei dieser Temperatur gerührt. Die Reaktionsbrühe wurde abgezogen, voll entsalztes Wasser wurde hinzudosiert und Restmengen an Dichlorethan wurden destillativ entfernt.
Ausbeute an amidomethyliertem Perlpolymerisat : 2570 ml
Elementaranalytische Zusammensetzung:

| | |
|---|---|
| Kohlenstoff: | 73,6 Gew. %; |
| Wasserstoff: | 4,7 Gew. %; |
| Stickstoff: | 6,1 Gew. %; |
| Rest: | Sauerstoff. |

### 1c) Herstellung des aminomethylierten Perlpolymerisates

In einem Reaktor wurden 819,1 ml 50 gew.-%ige Natronlauge mit voll entsalztem Wasser auf 3048 ml Gesamtvolumen aufgefüllt. Dazu wurden 2540 ml amidomethyliertem Perlpolymerisat aus 1b) bei Raumtemperatur dosiert. Die Suspension wurde in 2 Stunden auf 180°C erhitzt und 8 Stunden bei dieser Temperatur gerührt. Das erhaltene Perlpolymerisat wurde mit voll entsalztem Wasser gewaschen.
Ausbeute : 2100 ml

Elementaranalytische Zusammensetzung:

| | |
|---|---|
| Stickstoff : | 12,0 Gew.-% |
| Kohlenstoff: | 74,1 Gew.-%; |
| Wasserstoff: | 8,1 Gew.-%; |
| Sauerstoff: | 4,8 Gew.-% |

Bestimmung der Menge an basischen Gruppen : 2,33 mol/ Liter Harz

Aus der elementaranalytischen Zusammensetzung des aminomethylierten Perlpolymerisates lässt sich errechnen, dass im statistischen Mittel pro aromatischem Kern - herrührend aus den Styrol und Divinylbenzoleinheiten - 1,36 Wasserstoffatome durch Aminomethylgruppen substituiert wurden.

### 1d) Herstellung eines Chelatharzes mit Iminodiessigsäuregruppen

In einem Reaktor wurden bei Raumtemperatur 474 ml voll entsalztes Wasser vorgelegt. Dazu wurden 450 ml aminomethyliertes Perlpolymerisat aus Beispiel 1c) dosiert . Die Suspension wurde auf 90 °C erhitzt. Innerhalb von 4 Stunden wurden 408,7 Gramm 80 gew.-%ige wässrige Chloressigsäure dosiert. Hierbei wird der pH Wert der Suspension durch Dosierung von 50 gew.-%iger wässriger Natronlauge bei pH 9,2 gehalten. Anschließend wurde die Suspension auf 95 °c erhitzt. Der pH Wert wird durch Dosierung von Natronlauge auf 10,5 eingestellt. Es wurde 6 Stunden lang bei 95°C und pH 10,5 gerührt. Danach wurde der Ansatz abgekühlt. Das erhaltene Chelatharz wurde auf einem Sieb mit voll entsalztem Wasser gewaschen.
Ausbeute : 830 ml
Quellfaktor ml Endprodukt pro Gramm Ausgangsperlpolymerisat : 10,55
Stickstoffgehalt : 5,3 Gew. %
Mittlerer Perldurchmesser 400 µ
Menge an chelatisierenden Gruppen ( Totalkapazität ) : 3,11 mol/l
Penetriertes Quecksilberporenvolumen : 856 mm³/g
Porosität : 57 %
Mittlerer Porendurchmesser : 82 nm
Harzstabilität im 200 Zyklen Quellungsstabilitätstest : 99 % ganze Perlen.

**Tabelle 1 Vergleich der dynamischen Aufnahmekapazitäten für Kalzium von zwei Chelatharzen des Standes der Technik sowie dem erfindungsgemäßen Harz; alle drei Harze sind Chelatharze mit Iminoessigsäuregruppen**

| **Herkunft** | **Harztyp** | **Dynamische Aufnahmekapazität für Kalzium in Gramm pro Liter Chelatharz** | **Endpunkt der Kalziumauf nahme des Chelatharzes bei Konzentrationen an Kalzium im Eluat von ppb** | **Minderung der Kalziummenge in der Sole durch die Chelatharze bis auf Restmengen an Kalzium in ppb** |
|---|---|---|---|---|
| DE 3 704 307 A1 | Iminodiessigsäure | 4,2 | >50 | 10 bis 50 |
| US-A 4818773 | Iminodiessigsäure | 7,1 | >500 | Bei 20 bis 500 |
| Erfindungsgemäß | Iminodiessigsäure | 18,5 | 20 | 1 bis 20 |

Mit Hilfe eines photometrischen Prozessanalysators wurde stündlich die Kalziumkonzentration in der gefilterten 30%igen NaCl-Lösung gemessen. Der Versuch wurde beendet, als die Calciumkonzentration im Filtrat 20µg Ca/Liter deutlich überschritt.

Aufgrund des bis zu diesem Zeitpunkt erreichten Filtervolumens und der bekannten Calcium-Zulaufkonzentration wurde die so genannte dynamische Aufnahmekapazität für Kalzium eines Harzes in Bezug zu diesen Versuchsbedingungen ermittelt.

### Ergebnis:

Dynamische Aufnahmekapazität für Kalzium der Normalkörnung

| | |
|---|---|
| (⊘0,65mm ±0,05mg) | 8,2g Ca/Liter |

Dynamische Aufnahmekapazität für Kalzium der Feinkörnung

| | |
|---|---|
| (0 0,40mm ±0,05mg) | 18,4g Ca/Liter |

Das erfindungsgemäße feingekörnte Chelatharz hat eine 2,2-fach höhere dynamische Aufnahmekapazität für Kalzium als das normalgekörnte handelsübliche Lewatit^{®} Monoplus TP208 gemäß EP 1 078 690 A2.

### Beispiel 2

Bariumentfernung aus einer 30%igen Kochsalzlösung mit Hilfe eines Chelatharzes mit Iminodiessigsäuregruppen (mittlerer Perldurchmesser 0,40mm ±0,05mm) im Vergleich zu einem Chelatharz mit Iminodiessigsäuregruppen (mittlerer Perldurchmesser 0,65mm ±0,05mm) gemäß EP 1 078 690 A2.

### Versuchbeschreibung:

Mittels einer Schlauchquetschpumpe wurde kontinuierlich Sole über die verschieden gekörnten zu prüfenden Ionenaustauscher gepumpt.

Dabei wurden nachfolgende Versuchsparameter berücksichtigt:

| | |
|---|---|
| Zulaufkonzentration | 14 mg Ca/Liter |
| Zulaufkonzentration | 1 mg Ba/Liter |
| Zulauf pH | 8,2 |
| Zulaufgeschwindigkeit | 20 BV/h |
| Säulentemperatur | 60°C |
| Durchbruchskonzentration | 20 µg Ca/Liter |
| Eingesetzte Harzmenge | 100ml |
| Harz-Form | Na-Form |

Die Versuchsdurchführung erfolgte wie in Beispiel 2 beschrieben. Mit Hilfe eines photometrischen Prozessanalysators wurde stündlich die Bariumkonzentration in der gefilterten 30%igen NaCl-Lösung gemessen (BV = Bettvolumen).

### Ergebnis:

Das erfindungsgemäße fein disperse Chelatharz mit Iminodiessigsäuregruppen (mittlerer Perldurchmesser 0,40mm ±0,05mm) vermindert die Konzentration an Bariumionen im Eluat auf Werte im Bereich 10 bis 30 ppb.

Das normal gekörnte Chelatharz mit Iminodiessigsäuregruppen gemäß EP 1 078 690 A2 (mittlerer Perldurchmesser 0,65mm ±0,05mm ) vermindert die Konzentration an Bariumionen im Eluat auf Werte im Bereich 100 bis 70 ppb.

Das erfindungsgemäße fein disperse Chelatharz mit Iminodiessigsäuregruppen reduziert die Bariumkonzentration in der Natriumchloridsole weitaus besser bis zu deutlich niedrigeren Restgehalten als das normal gekörnte Chelatharz gemäß EP 1 078 690 A2.

### Beispiel 3

Calciumentfernung aus einer 30%igen Kochsalzlösung mit Hilfe eines Chelatharzes mit Iminodiessigsäuregruppen (mittlerer Perldurchmesser 0,40mm ±0,05mm) im Vergleich zu einem Chelatharz mit Iminodiessigsäuregruppen gemäß EP 1 078 690 A2 (mittlerer Perldurchmesser ∅ 0,65mm ±0,05mm).

### Versuchbeschreibung:

Mittels einer Schlauchquetschpumpe wurde kontinuierlich Sole über die verschieden gekörnten zu prüfenden Ionenaustauscher gepumpt.

Dabei werden nachfolgende Versuchsparameter berücksichtigt:

| | |
|---|---|
| Zulaufkonzentration | 14 mg Ca/Liter |
| Zulauf pH | 8,2 |
| Zulaufgeschwindigkeit | 20 BV/h |
| Säulentemperatur | 60°C |
| Durchbruchskonzentration | 20 µg Ca/Liter |
| Eingesetzte Harzmenge | 100ml |
| Harz-Form | Na-Form |

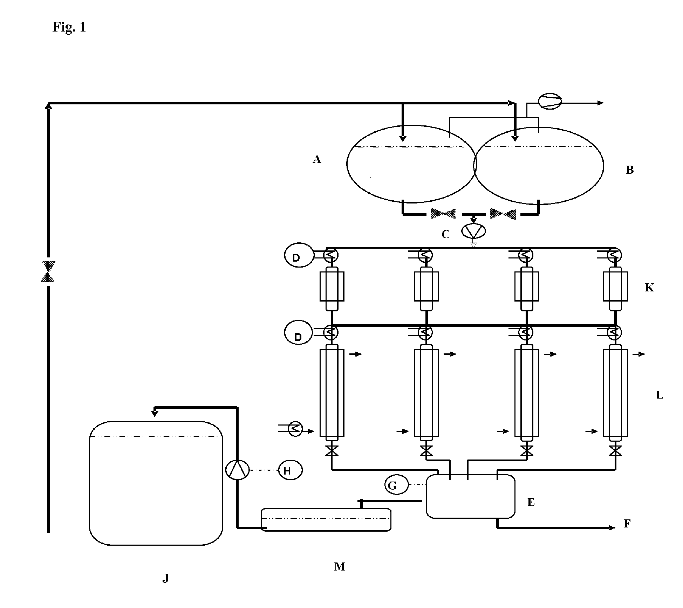

Versuchaufbau siehe Fig. 1:
A = Solevorlagenbehälter 300 g NaCl/Liter ; 400 Liter Volumen
B = Solevorlagenbehälter 300 g NaCl/Liter ; 400 Liter Volumen
C = Schlauchpumpe
D = TIC (70°C)
E = ADI (Kalzium Titration)
F = Abwasser
G = QIR
H = LIC
J = Sole Anmischbehälter 600 Liter
K = beheizbare Vorfilter (Arbeitstemperatur 70°C)
L = beheizbare Filtersäulen (Arbeitstemperatur 60°C)
M = Soleüberführungsbecher/Sole wurde mittels Tauchpumpe in den Auffangbehälter überführt
TIC = Temperatur Ist-Wert-Anzeige mit Regelung
ADI = Abkürzung für den Process Analyser ADI 2040 der Firma Metrohm
QIR = Qualitäts Ist-Wert-Anzeige mit Registrierung (in diesem Fall steht Q für den Ca/Mg-Gehalt im Filtrat)
LIC = Stand Ist-Wert-Anzeige mit Regelung

### Beispiel 4

Vergleich der Kenndaten der beiden in den Beispielen 4 und 5 eingesetzten Chelatharze mit Iminoessigsäuregruppen

**Tabelle 2**

| **Kennzahl** | **Erfindungsgemäßes Chelatharz mit mittlerem Perldurchmesser 400 µ** | **Chelatharz mit mittlerem Perldurchmesser 650 µ gemäß** EP 1 078 690 A2 |
|---|---|---|
| Quellfaktor ml Endprodukt pro Gramm Ausgangsperlpolymerisat | 10,55 | 9,2 |
| Mittlerer Perldurchmesser in µ | 400 | 650 |
| Menge an chelatisierenden Gruppen (Totalkapazität) in mol/l | 3,11 | 2,39 |
| Penetriertes Quecksilberporenvolumen in mm³/g | 856 | 558 |
| Porosität : in % | 57 | 47 |
| Mittlerer Porendurchmesser in nm | 82 | 67 |
| Harzstabilität im 200 Zyklen Quellungsstabilitätstest in % ganze Perlen | 99 | 98 |
| Erstsubstitution | 1,28 | - |
| Dynamische Aufnahmekapazität für Calcium in Gramm Calcium pro Liter Chelatharz | 18,4 | 8,2 |
| Beladungsdauer des Chelatharzes bis im Filtrat die Calciummenge 2 0 ppb überschritt : in Stunden | 55,6 | 28 |
| Verminderung der Konzentration an Bariumionen im Eluat auf | Werte im Bereich 10 bis 30 ppb | Werte im Bereich 100 bis 70 ppb |
| Zweitsubstitution | 1,90 | 1,8- |

Das Chelatharz mit mittlerem Perldurchmesser von 400 µ zeigt im Vergleich zum Chelatharz mit mittlerem Perldurchmesser 650 µ eine deutlich höhere Totalkapazität sowie ausgesprochen hohe Werte beim Porenvolumen, der Porosität und dem Porendurchmesser ohne Einbußen bei der Harzstabilität zu offenbaren. Ferner zeigt das Chelatharz mit mittlerem Perldurchmesser von 400 µ im Vergleich zum Chelatharz mit 650 µ eine um 120% höhere Aufnahmekapazität für Calcium sowie eine um 99% verlängerte Beladungsdauer des Chelatharzes in Stunden bis im Filtrat die Calciummenge 20ppb überschritten wird. Zudem reduziert das feinperlige Chelatharz die Bariumkonzentrationen in der Sole zu deutlich niedrigeren Restwerten.

### Beispiel 5

Erhöhte Regenerationseffizienz eines mit Kalzium beladenen Chelatharzes mit Iminodiessigsäuregruppen (mittlerer Perldurchmesser 0,40mm ±0,05mm) im Vergleich zu einem Chelatharz mit Iminodiessigsäuregruppen gemäß EP 1 078 690 A2 (mittlerer Perldurchmesser ∅ 0,65mm ±0,05mm).

Die beiden in Beispiel 4 mit Kalziumionen beladenen Chelatharze wurden zur Ablösung der Kalzium - und anderer zweiwertiger Kationen ( Regeneration) mit 2 Bettvolumen 7,5 gew. % iger Salzsäure von oben in 2 Stunden eluiert und anschließend mit 4 Bettvolumen voll entsalztem Wasser von oben eluiert. Danach wurde zur Überführung des Chelatharzes von der freien Säure in die Natriumform dieses mit 2000 ml 4 gew. % iger wässriger Natronlauge behandelt und anschließend mit 2 Bettvolumen voll entsalztem Wasser eluiert.

Die beiden auf diese Weise regenerierten Chelatharze wurden wiederum, wie in Beispiel 4 beschrieben, zur Entfernung von Kalziumionen aus Natriumchloridsolen eingesetzt.

### Ergebnis:

Dynamische Aufnahmekapazität für Kalzium der Normalkörnung

| | |
|---|---|
| (∅0,65mm ±0,05mm) | 8,3g Ca/Liter |

Dynamische Aufnahmekapazität für Kalzium der Feinkörnung

| | |
|---|---|
| (∅ 0,40mm ±0,05mm) | 21,4g Ca/Liter |

Das erfindungsgemäße feingekörnte Chelatharz zeigt nachdem es mit der gleichen Menge an Regeneriersäure (Salzsäure) wie die Normalkörnung an Chelatharz regeneriert wurde eine nahezu 3 fach höhere dynamische Aufnahmekapazität für Kalzium als die Ausgangsware.

Die gleiche Menge an Salzsäure löste also bei dem feingekörnten Chelatharz mehr als die doppelte Menge an Kalzium ab verglichen mit der Normalkörnung gemäß EP 1 078 690 A2 und danach (also nach Regeneration) war das feingekörnte Chelatharz wiederum in der Lage sogar mehr als die ursprüngliche Menge an Kalziumionen aus Natriumchloridsole zu entfernen!

## Patentansprüche

1. Verfahren zur Herstellung monodisperser Ionenaustauscher mit chelatisierenden, funktionellen Gruppen, dargestellt durch das Strukturelement (I) 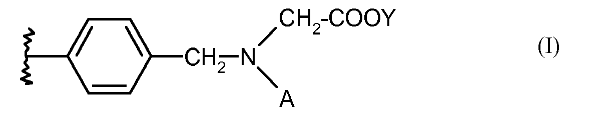 worin 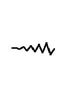 für das Polymergerüst steht und Y für Wasserstoff, Natrium oder Kalium steht und A für Wasserstoff, CH₂COOH, CH₂COONA oder CH₂COOK steht,
**dadurch gekennzeichnet, dass** man
a) Monomertröpfchen aus wenigstens einer monovinylaromatischen Verbindung und wenigstens einer polyvinylaromatischen Verbindung sowie wenigstens einem Porogen und wenigstens einem Initiator oder einer Initiatorkombination nach dem Jetting Prinzip oder dem Seed-Feed-Prinzip zu einem monodispersen, vernetzten Perlpolymerisat umsetzt,
b) das monodisperse, vernetzte Perlpolymerisat mit Phthalimidderivaten phthalimidomethyliert indem man eine Teilmenge von 1 bis 15 Gew.-% des Perlpolymerisats in das SO₃-Addukt des in inertem Lösungsmittel vorliegenden Phthalimidderivats einträgt und bei einer Temperatur von ≤ 35°C für 1 bis 15 Stunden rührt wobei die Menge an freiem SO₃ 0,28 bis 0,5 mol bezogen auf 1 mol Phthalimid beträgt und danach die restliche Menge des Perlpolymerisats in das SO₃-Addukt des in inertem Lösungsmittel vorliegenden Phthalimidderivats bei einer Temperatur von 30-75°C einträgt,
c) das phthalimidomethylierte Perlpolymerisat zu aminomethyliertem Perlpolymerisat umsetzt und
d) das aminomethylierte Perlpolymerisat zu Ionenaustauschern mit chelatisierenden Gruppen reagieren lässt.

2. Monodisperse Ionenaustauscher mit chelatisierenden, funktionellen Gruppen des Strukturelements (I) 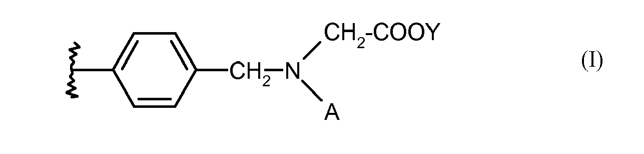 worin 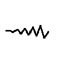 für das Polymergerüst steht und Y für Wasserstoff, Natrium oder Kalium steht und A für Wasserstoff, CH₂COOH, CH₂COONa oder CH₂COOK steht
mit einer Totalkapazität TK von 2,7 bis 3,2 mol/l und einem mittleren Porendurchmesser von 75 bis 90 nm.

3. Monodisperse Ionenaustauscher mit chelatisierenden, funktionellen Gruppen gemäß Anspruch 2, erhältlich durch
a) Umsetzen von Monomertröpfchen aus wenigstens einer monovinylaromatischen Verbindung und wenigstens einer polyvinylaromatischen Verbindung sowie wenigstens einem Porogen und wenigstens einem Initiator oder einer Initiatorkombination nach dem Jetting Prinzip oder dem Seed-Feed-Prinzip zu einem monodispersen, vernetzten Perlpolymerisat,
b) Phthalimidomethylieren des monodispersen, vernetzten Perlpolymerisats mit Phthalimidderivaten, indem man eine Teilmenge von 1 bis 15 Gew.-% des Perlpolymerisats in das SO₃-Addukt des in inertem Lösungsmittel vorliegenden Phthalimidderivats einträgt und bei einer Temperatur von ≤ 35°C für 1 bis 15 Stunden rührt, wobei die Menge an freiem SO₃ 0,28 bis 0,5 mol bezogen auf 1 mol Phthalimid beträgt und danach die restliche Menge des Perlpolymerisats in das S O₃-Addukt des in inertem Lösungsmittel vorliegenden Phthalimidderivats bei einer Temperatur von 30-75 einträgt,
c) Umsetzen des phthalimidomethylierte Perlpolymerisats zu aminomethyliertem Perlpolymerisat und
d) Reagieren des aminomethylierten Perlpolymerisats zu Ionenaustauschern mit chelatisierenden, funktionellen Gruppen.

4. Verwendung der Chelataustauscher gemäß der Ansprüche 2 oder 3 zur Adsorption von Metallen.

5. Verwendung gemäß Anspruch 4, **dadurch gekennzeichnet dass** es sich bei den Metallen um Erdalkalimetalle, Schwermetalle oder Edelmetalle oder deren Verbindungen handelt.

6. Verwendung gemäß Anspruch 4, **dadurch gekennzeichnet, dass** die Adsorption der Metalle aus wässrigen Lösungen und organischen Flüssigkeiten erfolgt.

7. Verwendung gemäß Anspruch 6, **dadurch gekennzeichnet dass** es sich bei den wässrigen Lösungen um Lösungen von Erdalkalimetallen oder Alkalimetallen oder Solen für die Alkalichloridelektrolyse handelt.

8. Verwendung gemäß Anspruch 4, **dadurch gekennzeichnet, dass** es sich bei den Metallen um Erdalkalimetalle aus Solen für die Alkalichloridelektrolyse handelt.

9. Verwendung gemäß Anspruch 5, **dadurch gekennzeichnet, dass** es sich bei den Schwermetallen und Edelmetallen um Quecksilber, Eisen, Kobalt, Nickel, Kupfer, Zink, Blei, Cadmium, Mangan, Uran, Vanadium, Elemente der Platingruppe sowie Gold oder Silber handelt.

10. Verwendung gemäß Anspruch 8, **dadurch gekennzeichnet, dass** es sich bei den Erdalkalimetallen um die Metalle Magnesium, Kalzium, Strontium oder Barium handelt.

11. Verwendung gemäß Anspruch 10, **dadurch gekennzeichnet, dass** es sich um die selektive Entfernung von Barium aus Solen für die Alkalichloridelektrolyse bei gleichzeitig deutlich verbesserter Kalzium Adsorption handelt.

12. Verwendung gemäß Anspruch 8, **dadurch gekennzeichnet, dass** die Adsorption der Erdalkalimetalle zur Steigerung der Effektivität von Membranverfahren in der Alkalichloridelektrolyse erfolgt.

13. Verwendung gemäß Anspruch 7, **dadurch gekennzeichnet, dass** die Adsorption der Metalle zum Schutz der Membranen und Elektroden in der Alkalichloridelektrolyse erfolgt.
